# EUROPÄISCHE PATENTSCHRIFT

(11) **EP 1 570 580 B1**
(45) Veröffentlichungstag und Bekanntmachung des Hinweises auf die Patenterteilung: **25.07.2007**
(21) Anmeldenummer: 03788832.8
(22) Anmeldetag: 02.12.2003
(51) Int. Cl.: H04B 1/28

(54) **EMPFANGSANORDNUNG EINES SCHNURLOSEN KOMMUNIKATIONSSYSTEMS**
RECEIVER ARRAY OF A WIRELESS COMMUNICATION SYSTEM
DISPOSITIF DE RECEPTION POUR SYSTEME DE COMMUNICATION SANS FIL

(30) Priorität: 10.12.2002 DE 10257666
(43) Veröffentlichungstag der Anmeldung: 07.09.2005
(73) Patentinhaber: Infineon Technologies AG, 81669 München (DE)
(72) Erfinder: LI PUMA, Giuseppe, 44791 Bochum (DE); WAGNER, Elmar, 47269 Duisburg (DE)
(74) Vertreter: Epping - Hermann - Fischer
(86) Internationale Anmeldenummer: PCT/DE2003/003960
(87) Internationale Veröffentlichungsnummer: WO 2004/054122

(56) Entgegenhaltungen:
- WO-A-02/37706
- US-A1- 2001 041 584

## Beschreibung

Die Erfindung betrifft eine Empfangsanordnung eines schnurlosen Kommunikationssystems gemäß Patentanspruch 1.

Schnurlose digitale Kommunikationssysteme wie beispielsweise DECT, WDCT, Bluetooth o. ä. benötigen zum Senden und Empfang über die Luftschnittstelle gesendeter hochfrequenter Signale geeignete Empfänger, die in aufwandsgünstiger Weise dem Demodulator ein möglichst verzerrungsfreies Basisbandsignal liefern. Neben einer hohen Empfindlichkeit sind hierbei ein hoher Integrationsgrad, geringe Kosten, niedrige Stromaufnahme sowie Flexibilität hinsichtlich der Anwendbarkeit für verschiedene digitale Kommunikationssysteme erwünscht. Zur Ausnutzung der Vorteile der digitalen Technik, z. B. keine Temperaturabhängigkeit, wird dabei zumindest ein Teil der Empfängerschaltung in Form digitaler Signalverarbeitungselemente realisiert. Um kostengünstige Realisierungen von Empfängern zu ermöglichen, ist es wünschenswert, daß verschiedene Mobilfunkstandards vom selben Empfänger unterstützt wird. Beispielsweise ließen sich Geräte deutlich kostengünstiger herstellen, wenn ein Empfänger für beispielsweise den europäischen Telefonstandard DECT und gleichzeitig für den amerikanischen WDCT-Standard verwendbar wären. Diese Empfänger werden aus Gründen der Integrierbarkeit möglicherweise als Empfänger mit einer niedrigen Zwischenfrequenz ausgeführt (low IF = low Intermediate Frequency).

Bisherige Empfängerkonzepte verwenden getrennte Empfangsbausteine in einem Gerät bzw. getrennte vollständige Empfängereinheiten für unterschiedliche Standards. Alternativ werden analogseitig Schaltungen verwendet, die aufwendig zwischen verschiedenen Empfangsbandbreiten umschalten. Die Zwischenfrequenz beträgt dabei bei DECT beispielsweise den halben Kanalabstand, während sie bei WDCT hierfür den gesamten Kanalabstand verwendet. Da bei DECT der Kanalabstand die Hälfte des Kanalabstandes von WDCT beträgt, ist die Zwischenfrequenz also gleich, nämlich 864 Khz. Daher muß für einen Empfänger, der beide Systeme empfangen soll, die Bandbreite bei gleicher Mittenfrequenz sowohl für die Filter als auch den Demodulator umgeschaltet werden können. Auch bei der digitalen Realisierung muß die Bandbreite bei gleicher Mittenfrequenz umschaltbar gemacht werden. Die konstante Mittenfrequenz bedingt aber jedoch, daß auch die Abtastrate gleich bleibt. Es müssen also die Koeffizienten des Filters und des Demodulators geändert werden.

Aus der DE10060425A1 ist ein übliches Empfängerkonzept bekannt, das mit einem Standard, beispielsweise dem DECT-Standard arbeitet.

In der WO 02/37706 A1 ist ein Breitbandsende- und Empfangssystem für mehrere unterschiedliche Mobilfunkstandards beschrieben. Dabei sind explizit für die einzelnen unterschiedlichen Standards unterschiedliche Dezimationeinheiten und Demodulationsschaltungen gefordert.

Gleiches gilt für die US 2001/0041581 A1, in der ein Radioempfänger mit zusätzlicher Verstärkung des Signals für unterschiedliche Radiokommunikationssysteme offenbart.

Der Erfindung liegt so die Aufgabe zugrunde, eine Empfangsanordnung eines schnurlosen Kommunikationssystems vorzusehen, das bei minimalem Aufwand den Betrieb in Kommunikationssystemen mit unterschiedlichem Standard zulässt.

Diese Aufgabe wird erfindungsgemäß mit den in Patentanspruch 1 angegebenen Maßnahmen gelöst. Durch das Vorsehen zumindest zweier Dezimationspfade mit verschiedenen Dezimationseigenschaften ist gewährleistet, daß die digitale Signalverarbeitung für Kommunikationssysteme mit unterschiedlichen Standards mit minimalem Aufwand gewährleistet ist. Weitere vorteilhafte Ausgestaltungen der Erfindung sind in untergeordneten Ansprüchen angegeben. In einer Ausgestaltung ist vorgesehen, daß in einer Dezimationsstufe eine erste Dezimation stattfindet und nach dem Aufteilen in verschiedene Dezimationspfade, die jeweils für die verschiedenen Standards zugeordnet sind, die für jeden Standard entsprechende Dezimation erfolgt.

In einem zweiten Ausführungsbeispiel erfolgt keine vorangestellte Dezimation und je Pfad erfolgt die für jeden Standard notwenige Dezimation vollständig.
Schließlich ist vorgesehen, daß zusammen mit dem Auswählen des Dezimationspfades ein Auswählen entsprechender Kanalfilter bzw. Eingangsverstärker in der analogen Hochfrequenzeingangsstufe erfolgt.

Nachfolgend wird die Erfindung unter Bezugnahme auf die Zeichnung im einzelnen erläutert. Es zeigen:
- Figur 1: einen Aufbau einer Empfangsanordnung eines schnurlosen Kommunikationssystems in Blockdarstellung,
- Figur 2: ein erstes Ausführungsbeispiel und
- Figur 3: ein zweites Ausführungsbeispiel.

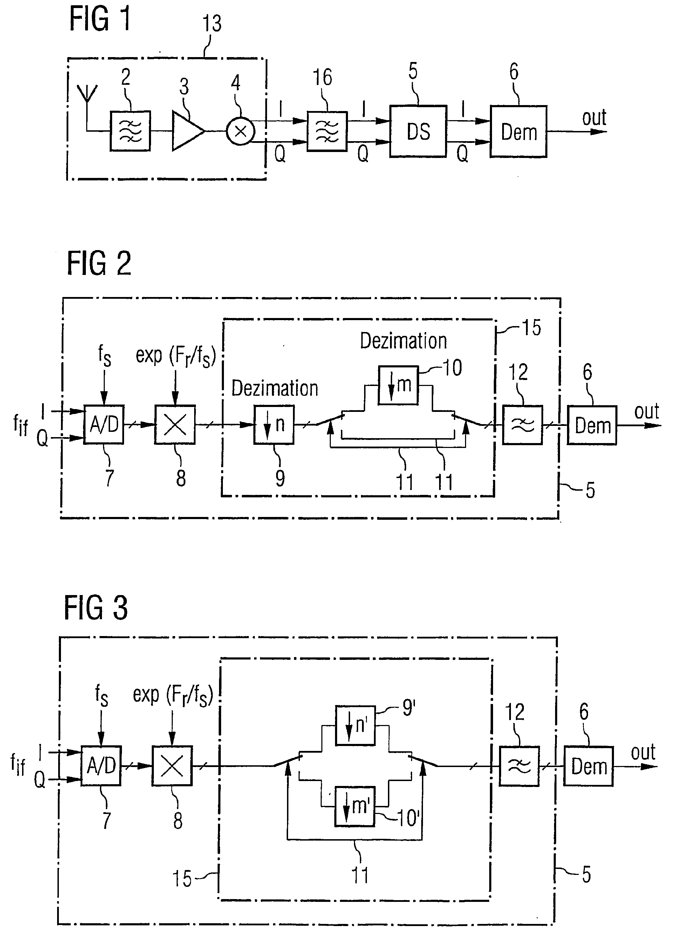

Figur 1 zeigt in einem Blockschaltbild eine Empfangsantenne 1, die empfangene Signale einem Eingangsfilter 2 zuführt. Die im Eingangsfilter 2,bzw RF-Bandfilter gefilterten Signale werden einem Eingangsverstärker zugeführt, der typischerweise als rauscharmer Verstärker (LNA = low noise amplifier) ausgeführt ist. Das Ausgangssignal des Eingangsverstärkers 3 wird einer ersten Mischstufe 4 zugeführt. Hier erfolgt eine komplexe Mischung zu einer komplexen Zwischenfrequenz, die die Anteile I und Q aufweist, die eine 90 Grad-Phasenverschiebung zueinander aufweisen. Diese beiden Anteile I und Q werden nach einem Durchlaufen eines Kanalfilters 16 einer Digitalsignalverarbeitungseinheit 5 zugeführt. In dieser erfolgt zunächst eine Analog-/Digitalumsetzung und nachfolgend eine digitale Signalverarbeitung in der Form, daß ausgangsseitig die Anteile I und Q einem Demodulator 6 zuführbar sind, der aus den komplexen Anteilen I und Q ein reelles Ausgangssignal OUT erzeugt.

In Figur 2 ist ein erstes Ausführungsbeispiel in detaillierter Blockdarstellung abgebildet. Die beiden analogen Komponenten I und Q der Zwischenfrequenz f_{if} werden dem Analog-/Digitalumsetzer 7 zugeführt, wo sie mit einer Abtastrate fₛ abgetastet werden. Die Abtastung erfolgt bezogen auf die Kanalbandbreite in Überabtastung.

Konkret bedeutet dies folgendes: Die Datenrate gemäß dem DECT-Standard beträgt Rbit = 1,152 Mbit/s. Die Datenrate gemäß dem WDCT-Standard ist nur halb so groß, nämlich Rbit WDCT = 576 kbit/s. Ist eine Abtastfrequenz fₛ = 72 x Rbit für den DECT-Standard vorgesehen, so ergibt sich für den WDCT-Standard die gleiche Abtastfrequenz fₛ, da die Datenrate halb so groß ist zu fₛ = 144 x Rbit bei WDCT.
Nachfolgend werden die digitalisierten I- und Q-Anteile einer Digitalsignalverarbeitungseinheit 5 zugeführt. Diese umfaßt einen komplexen digitalen Mischer. Dieser setzt die Signale auf ein sogenanntes Basisband um, so daß die Bandbreite unabhängig von der Mittenfrequenz ist. Auf diese Art und Weise ist die Verwendung komplexer Bandpaßfilter umgangen und es können einfache Tiefpaßfilter verwendet werden. Nach der digitalen Mischstufe 8 werden die Signale einer Dezimationseinheit 15 zugeführt.

Diese umfaßt in dem dargestellten Ausführungsbeispiel gemäß Figur 2 zunächst eine erste Dezimationsstufe 9. Hier erfolgt eine Dezimation um den Faktor n. Eine Signalpfadeinrichtung 11 führt nunmehr, je nachdem welcher Pfad gewählt ist, das Ausgangssignal der ersten Dezimationsstufe 9 einer zweiten Dezimationsstufe 10 oder einem Bypass 14 zu, der die zweite Dezimationsstufe umgeht. In der zweiten Dezimationsstufe 10 erfolgt eine Dezimation um den Faktor m. Hinter dem Bypass 14 bzw. der zweiten Dezimationsstufe 10 führt die Signalpfadwähleinrichtung 11 die beiden Pfade wieder zusammen. Für den konkreten Fall, daß der Empfänger sowohl dem DECT-Standard als auch dem WDCT-Standard genügen soll, erfolgt in der ersten Dezimationsstufe 9 eine Dezimation mit n = 8 und in der zweiten Dezimationsstufe 10 eine Dezimation mit m = 2.

Für den DECT-Standard wird über die Signalwähleinrichtung 11 für die weitere Signalverarbeitung der Bypaßpfad 14 gewählt, so daß es eine Gesamtdezimation von 8 für die Dezimationseinheit 15 vorgesehen ist. Für den WDCT-Standard wird über die Signalpfadwähleinrichtung 11 der Pfad über die zweite Dezimationsstufe 10 gewählt. Hier erfolgt eine zusätzliche Dezimation mit m = 2. Auf diese Weise ergibt sich für den WDCT-Standard eine Gesamtdezimation um 16. Folglich weisen die Signale am Ende der Dezimationseinheit 15 sowohl für den DECT-Standard als auch für die WDCT-Standard das selbe Verhältnis von Abtastrate zu Bitrate auf.
Auf diese Weise können alle nachfolgenden Funktionsblöcke, wie beispielsweise die Digitalfiltereinrichtungen 12, in der eine Filterung und ein Equilizing erfolgt, als auch die Demodulationsschaltung 6 unverändert verwendet werden. Ergänzend, was jedoch auch bei bisherigen Geräten, die für mehrere Standards geeignet sind, vorgesehen ist, ist das parallel zur Umschaltung von der Dezimationsstufe 15 eine Umschaltung HFeingangsseitig erfolgen muß. Das heißt, sowohl das Eingangsfilter 2 muß auf die dem Standard entsprechende Frequenz und Bandbreite eingestellt werden, wie auch der rauscharme Eingangsverstärker, der entsprechend dem gewählten Standard mit einer entsprechend angepaßten Bandbreite versehen sein muß. Dies kann in der Form erfolgen, daß entweder je nach gewähltem Standard unterschiedliche Filter und Verstärkerpfade vorgesehen sind oder die Filter und Verstärker entsprechend umschaltbar gemacht sind.

Nachdem das bisherige Ausführungsbeispiel anhand dem DECT-Standard und dem WDCT-Standard beschrieben wurde, soll noch darauf hingewiesen werden, daß die Erfindung nicht nur darauf eingeschränkt ist, diese beiden Standards in einer Empfängerschaltung zu vereinen. Zum Beispiel sind zusätzliche Standards oder andere Standards zu verwenden. Dabei ist es möglich, durch geeignete Wahl der Abtastung und Dezimation das Erfindungskonzept anzupassen bzw. das Gerät für mehr als nur zwei Standards vorzusehen. In diesem Fall wären zusätzliche Pfade entsprechend der notwendigen Dezimationseinheit 15 vorzusehen.

In dem in Figur 3 dargestellten Ausführungsbeispiel, das grundsätzlich dem Ausführungsbeispiel in Figur 2 entspricht, sind gleiche Teile mit gleichen Bezugszeichen versehen. Der Unterschied, worauf sich die Beschreibung zu Figur 3 beschränkt, ist darin zu sehen, daß vor der Pfadaufteilung keine für beide Standards verwendete Dezimation erfolgt. Es sind eine erste Dezimationsstufe 9' und eine zweite Dezimationstufe 10' mit jeweils Dezimation n' bzw. m' vorgesehen, in den jeweils nach entsprechend dem gewählten Standard die vollständige Dezimation erfolgt. Dies wird immer dann der Fall sein, wenn die Dezimation für den einen Standard kein Vielfaches der Dezimation für den jeweils anderen Standard darstellt.

Auch hier können mehr als zwei Pfade vorgesehen sein.

### Bezugszeichenliste

- 1: Antenne
- 2: Eingangsfilter, RF-Bandfilter
- 3: Eingangsverstärker
- 4: erste Mischstufe
- 5: Digitalsignalverarbeitungseinheit
- 6: Demodulatoreinrichtung
- 7: Analog-/Digitalumsetzter
- 8: Digitalmischstufe
- 9: erste Dezimationsstufe
- 10: zweite Dezimationsstufe
- 11: Signalpfadeinrichtung
- 12: Digitalfiltereinrichtung
- 13: Hochfrequenzeingangsabschnitt
- 14: Bypaßpfad
- 15: Dezimationseinrichtung
- 16: Kanalfilter

## Patentansprüche

1. Empfangsanordnung eines schnurlosen Kommunikationssystems, mit einem analogen Hochfrequenzeingangsabschnitt (13) und einer diesem nachgestellten Digitalsignalverarbeitungseinrichtung (5), bei der die Digitalsignalverarbeitungseinrichtung (5) eine Analog-/Digitalumsetzung (7) aufweist, der eine Digitalmischstufe (8) und eine Dezimationseinheit (15) nachgeschaltet ist, **dadurch gekennzeichnet, dass** der Signalpfad zur gemeinsamen Demodulationsschaltung (6) in der Dezimationseinheit (15) zumindest zwei Dezimationspfade mit verschiedenen Dezimationseigenschaften aufweist.

2. Empfangsanordnung nach Anspruch 1,
**dadurch gekennzeichnet, daß**
eine Dezimationpfadwähleinrichtung (11) vorgesehen ist, die zumindest zwischen einem ersten und einem zweiten Dezimationspfad auswählt.

3. Empfangsanordnung nach Anspruch 2,
**dadurch gekennzeichnet, daß**
der Dezimationspfadwähleinrichtung (11) ein gemeinsames Dezimationsfilter (9) vorgeschaltet ist.

4. Empfangsanordnung nach Anspruch 2 oder 3,
**dadurch gekennzeichnet, daß**
zumindest einer der zumindest zwei Dezimationspfade ein Dezimationsfilter (10; 9', 10') aufweist.

5. Empfangsanordnung nach Anspruch 3,
**dadurch gekennzeichnet, daß**
einer der Dezimationspfade ein Bypaßpfad (14) zu einem der Dezimationsfilter ist.

6. Empfangsanordnung nach einem der vorhergehenden Ansprüche,
**dadurch gekennzeichnet, daß**
dem Hochfrequenzeingangsabschnitt (13) ein umschaltbares Kanalfilter (16) für unterschiedliche Kanalbandbreiten nachgeschaltet ist und daß einer gewählten Kanalbandbreite ein vorbestimmter Dezimationspfad zugeordnet ist.

7. Empfangsanordnung nach Anspruch 6,
**dadurch gekennzeichnet, daß**
dem Kanalfilter (16) eine Hochfrequenzeingangsschaltung vorgeschaltet ist, dessen Bandmittelfrequenz auf die vorbestimmte Empfangsfrequenz abstimmbar ist.

## Claims

1. Receiving arrangement for a cordless communication system, having an analogue radio-frequency input section (13) and having a digital signal processing device (5) which is connected downstream from this, in which the digital signal processing device (5) has an analogue/digital converter (7) which is followed by a digital mixing stage (8) and a decimation unit (15),
**characterized in that**
the signal path to the common demodulation circuit (6) in the decimation unit (15) has at least two decimation paths with different decimation characteristics.

2. Receiving arrangement according to Claim 1,
**characterized in that**
a decimation path selection device (11) is provided, and selects at least between one first and one second decimation path.

3. Receiving arrangement according to Claim 2,
**characterized in that**
the decimation path selection device (11) is preceded by a common decimation filter (9).

4. Receiving arrangement according to Claim 2 or 3,
**characterized in that**
at least one of the at least two decimation paths has a decimation filter (10; 9', 10').

5. Receiving arrangement according to Claim 3,
**characterized in that**
one of the decimation paths is a bypass path (14) for one of the decimation filters.

6. Receiving arrangement according to one of the preceding claims,
**characterized in that**
the radio-frequency input section (13) is followed by a switchable channel filter (16) for different channel bandwidths, and **in that** a selected channel bandwidth is associated with a predetermined decimation path.

7. Receiving arrangement according to Claim 6,
**characterized in that**
the channel filter (16) is preceded by a radio-frequency input circuit, whose band mid-frequency can be tuned to the predetermined reception frequency.

## Revendications

1. Dispositif de réception d'un système de communication sans fil, comprenant une partie analogique d'entrée haute fréquence, et en aval de celle-ci, un dispositif (5) numérique de traitement du signal, dans lequel le dispositif (5) numérique de traitement du signal comporte un convertisseur (7) analogique/numérique en aval duquel est monté un étage (8) numérique de mélange et une unité (15) de décimation,
**caractérisé en ce que** le trajet du signal allant au circuit (6) commun de démodulation de l'unité (15) de décimation a au moins deux trajets de décimation ayant des propriétés de décimation qui sont différentes.

2. Dispositif de réception suivant la revendication 1,
**caractérisé en ce que**
il est prévu un dispositif (11) de sélection du trajet de décimation, qui choisit au moins entre un premier et un deuxième trajet de décimation.

3. Dispositif de réception suivant la revendication 2,
**caractérisé en ce qu'**un filtre (9) commun de décimation est monté en amont du dispositif (11) de sélection du trajet de décimation.

4. Dispositif de réception suivant la revendication 2 ou 3,
**caractérisé en ce que**
au moins l'un des au moins deux trajets de décimation a un filtre (10 ; 9', 10') de décimation.

5. Dispositif de réception suivant la revendication 3,
**caractérisé en ce que**
l'un des trajets de décimation est un trajet (14) de dérivation menant à l'un des filtres de décimation.

6. Dispositif de réception suivant l'une des revendications précédentes,
**caractérisé en ce que**
il est monté, en aval de la partie (13) d'entrée haute fréquence, un filtre (16) de canal, commutable pour des largeurs de bande de canal différentes et **en ce qu'**un trajet de décimation déterminé à l'avance est associé à une largeur de bande de canal sélectionnée.

7. Dispositif de réception suivant la revendication 6
**caractérisé en ce que**
il est monté, en amont du filtre (16) de canal, un circuit d'entrée haute fréquence, dont la fréquence moyenne de bande peut être accordée à la fréquence de réception déterminée à l'avance.
